# FASCICULE DE BREVET EUROPEEN

(11) **EP 4 480 745 B1**
(45) Date de publication et mention de la délivrance du brevet: **30.07.2025**
(21) Numéro de dépôt: 24180473.1
(22) Date de dépôt: 06.06.2024
(51) Int. Cl.: B60M 1/26, G01B 17/00, G01S 15/88, G01S 15/74

(54) **SYSTÈME ET PROCÉDÉ DE MESURE DE LA POSITION D'UN CONTREPOIDS D'UNE CATÉNAIRE FERROVIAIRE**
SYSTEM UND VERFAHREN ZUR MESSUNG DER POSITION EINES GEGENGEWICHTS EINER EISENBAHN FAHRLEITUNG
SYSTEM AND METHOD FOR MEASURING THE POSITION OF A COUNTERWEIGHT OF A RAILWAY CATENARY

(30) Priorité: 20.06.2023 FR 2306388
(43) Date de publication de la demande: 25.12.2024
(73) Titulaire: 4NRJ, 41260 La Chaussée-Saint-Victor (FR)
(72) Inventeur: Leguel, Anthony, 37500 CHINON (FR)
(74) Mandataire: Lequien, Philippe

(56) Documents cités:
- WO-A1-2023/079192
- CN-A- 111 693 000
- DE-A1- 4 208 173
- GB-A- 2 600 986

## Description

Le domaine de l'invention est celui de la conception et de la fabrication d'équipements de métrologie ferroviaire.

Plus précisément l'invention concerne un système permettant d'aider à mesurer la tension et le maintien en tension d'une caténaire.

Pour permettre un bon fonctionnement des caténaires de réseaux ferrés, ces dernières doivent être maintenues tendues selon une tension adéquate.

A titre indicatif, une caténaire peut par exemple mesurer 1,5 ou 2 kilomètres de long.

Selon un premier type de mise en oeuvre, un caténaire présente un point fixe en son milieu délimitant de la sorte deux sections chacune mise en tension depuis son extrémité opposée au point fixe.

Selon un deuxième type de mise en oeuvre, il n'existe pas de point fixe et la caténaire présente une section continue unique mise en tension depuis ses deux extrémités.

Pour réaliser la mise en tension et le maintien en tension d'une caténaire, des appareils tendeurs sont connus. Ces appareils tendeurs sont par exemple connus sous le nom d'appareils tendeurs à moufle.

Un appareil tendeur est fixé sur un poteau et sert d'interface entre la caténaire et le poteau. L'appareil tendeur comporte deux éléments qui sont reliés par un câble lesté. Chaque élément porte des poulies, et le câble lesté est enroulé autour de ces poulies.

Plus précisément, le câble lesté est enroulé autour des poulies et présente à une extrémité pendant en côté d'un support un contrepoids. Ce contrepoids tend ainsi à rapprocher l'un de l'autre les deux éléments de l'appareil tendeur.

Le contrepoids d'un appareil tendeur se déplace au sein d'une plage de compensation pour tendre le câble de contact de la catenaire à une tension mécanique constante dans une plage de température définie. En effet, la température ambiante et les conditions météorologique tel que l'ensoleillement d'un câble de contact d'une caténaire peuvent entraîner l'allongement ou la rétractation du câble de contact.

Ainsi, une caténaire est maintenue à une tension adéquate grâce à l'appareil tendeur qui transmet et démultiplie la force de tension exercée par le contrepoids.

Lors d'une opération de maintenance, les agents de maintenance doivent pouvoir vérifier la tension de la caténaire.

Pour réaliser ce contrôle, il est connu de l'art antérieur des dispositifs de mesure qui comprennent une règle montée à demeure sur l'appareil tendeur qui permet de lire facilement à partir du sol l'écartement entre les deux éléments de l'appareil tendeur. Il a été conçu plus récemment des dispositifs de mesure permettant à un agent d'obtenir la mesure depuis le sol, à l'aide d'une tablette électronique se connectant sans fil au dispositif de mesure.

Du document publié sous le numéro US 2012/0319850 A1, il est connu un système permettant de suivre la position, ou de mesurer un déplacement, du contrepoids. En plus de l'utilisation de la température ambiante captée à proximité du contrepoids, le système décrit dans ce document met en oeuvre un dispositif spécifique de mesure qui est préférentiellement un capteur de position linéaire magnétostrictif, ou un potentiomètre à corde.

Du document publié sous le numéro IT201800003748A1, il est également connu un dispositif de mesure similaire comprenant un émetteur d'un signal électrique solidaire du contrepoids de manière, ainsi qu'un récepteur fixé sur un poteau support en côté de l'axe de déplacement du contrepoids et de l'émetteur.

Le document CN 111 693 000 A, divulgue aussi un système de mesure de la position d'un contrepoids avec des senseurs de distance.

Ces techniques bien que permettant d'obtenir une mesure précise de la position d'un contrepoids, peuvent néanmoins nécessiter une installation complexe et lourde à mettre en œuvre.

L'invention a notamment pour objectif de pallier à ces inconvénients de l'art antérieur.

Plus précisément, l'invention a pour objectif de proposer une technique permettant de déterminer la position d'un contrepoids d'un système de caténaire qui soit simple à mettre en œuvre.

L'invention a également pour objectif de fournir une telle technique qui puisse être au moins aussi précise que celles selon l'art antérieur.

Ces objectifs, ainsi que d'autres qui apparaîtront par la suite, sont atteints grâce à l'invention qui a pour objet un système de mesure de la position d'un contrepoids suspendu en côté d'un poteau support d'une installation de caténaire, le système de mesure comprenant :
- un premier module destiné à être fixé sur le poteau support ;
- un second module destiné à être fixé sur le contrepoids ou sur un câble de suspension du contrepoids, en contrebas du premier module ;
caractérisé en ce que :
- le premier module comprend un émetteur-récepteur d'ondes acoustiques ;
- le second module comprend un émetteur-récepteur d'ondes acoustiques ;
et en ce que le système de mesure comprend des moyens de traitement électroniques comprenant :
- des premiers moyens de déclenchement de l'émission d'une première onde acoustique par le premier module ;
- des seconds moyens de déclenchement de l'émission d'une seconde onde acoustique par le second module suite à la réception de la première onde acoustique par le second module ;
- des premiers moyens de détermination d'un temps de réponse entre l'émission de la première onde acoustique et la réception de la seconde onde acoustique par le premier module ;
- des moyens de calcul d'une distance entre le premier module et le second module à partir du temps de réponse.

Grâce au temps de réponse entre l'émission de la première onde acoustique et la réception de la seconde ondes acoustiques, il est possible de calculer une distance entre le premier module et le second module.

En effet, ce temps de réponse résulte de la somme du temps de trajet de la première ronde acoustique entre le premier module et le second module, du temps s'écoulant entre la réception de la première onde acoustique et l'émission de la seconde onde acoustique par le second module, et du temps de trajet de la seconde onde acoustique entre le second module et le premier module.

En connaissant la vitesse de propagation du son dans l'air, ainsi que le temps entre l'émission et la réception des ondes acoustiques par le second module, il est possible de calculer la distance séparant le premier module du second module, et ainsi la distance séparant le premier module du contrepoids. Il est ainsi déterminé la position du contrepoids et une potentielle variation de sa position par rapport à une précédente position.

En mettant en oeuvre des émetteurs-récepteurs d'ondes acoustiques, le système est particulièrement simple à mettre en oeuvre.

En effet, les émetteurs-récepteurs d'ondes acoustiques émettent ou reçoivent des d'ondes acoustiques sans avoir besoin d'être parfaitement alignés sur un axe émission et/ou de réception des ondes acoustiques. L'installation du premier module et du second module ne souffrent pas, en conséquence, d'une difficulté d'installation relative un positionnement et une orientation particulièrement précise du type pouvant être rencontrée avec un télémètre laser.

Selon un mode de réalisation préféré, le second module comprend :
- une batterie électrique alimentant en énergie le second module ;
- une unité de traitement électronique formant une partie des moyens de traitement électroniques, dont les seconds moyens de déclenchement, l'unité de traitement électronique présentant un mode de veille à basse consommation d'énergie et un mode d'utilisation à consommation d'énergie normale, l'unité de traitement électronique étant paramétrée pour passer du mode de veille au mode d'utilisation lors de la reception de la première onde acoustique par l'émetteur-récepteur d'ondes acoustiques du second module.

Grâce à ce mode de réalisation, le second module est autonome. En d'autres termes, le second module n'a pas besoin d'être alimenté en continu par une source d'énergie externe. Le mode de veille à basse consommation d'énergie permet au second module d'économiser l'énergie contenue dans la batterie électrique.

Bien entendu, l'unité de traitement électronique peut être paramétrée pour passer de son mode d'utilisation à son mode de veille de manière prédéterminée. Ce paramétrage pour passer à son mode de veille peut correspondre par exemple à un laps de temps prédéterminé suivant l'envoi de la seconde onde acoustique.

Selon une conception préférée, le système de mesure comprend un troisième module destiné à être couplé sur le poteau support en contrebas du premier module, à une distance prédéterminée du premier module, le troisième module comprenant un émetteur-récepteur d'ondes acoustiques ,
et les moyens de traitement électroniques comprennent :
- des troisièmes moyens de déclenchement de l'émission d'une troisième onde acoustique par le troisième module suite à la réception de la première onde sonore par le troisième module ;
- des seconds moyens de détermination d'un temps de réponse de référence entre l'émission de la première onde acoustique par le premier module et la réception de la troisième onde acoustique par le premier module ;
- des moyens d'ajustement d'un calcul de la distance calculée par les moyens de calcul, à l'aide du temps de réponse de référence.

Grâce à cette conception, le système dispose de moyens lui permettant de prendre en compte les conditions environnementales pour ajuster le calcul de la distance réalisé par les moyens de calcul.

En effet, les conditions environnementales peuvent influer sur la vitesse de diffusion d'une onde acoustique.

Du fait que le troisième module et le premier module sont à une distance prédéterminée, alors il est possible de déterminer la vitesse de diffusion momentanée des ondes acoustiques entre le premier module et le troisième module.

Selon un mode de réalisation avantageux :
- les seconds moyens de déclenchement de l'émission d'une seconde onde acoustique sont configurés pour déclencher l'émission de la seconde onde acoustique après un premier laps de temps suivant la réception de la première onde acoustique ;
- troisièmes moyens de déclenchement de l'émission d'une troisième onde acoustique sont configurés pour déclencher l'émission de la troisième onde acoustique après un second laps de temps suivant la réception de la première onde acoustique ;
le premier laps de temps étant strictement différent du second laps de temps.

Grâce à ce mode de réalisation, il est aisément déterminable laquelle de la seconde onde et de la troisième onde parvient en premier au premier module.

Il est ainsi évité qu'une variation des conditions environnementales n'entraîne les arrivées de la seconde onde acoustique et de la troisième onde acoustique au premier module d'une manière qui rendrait complexe la distinction entre ces deux ondes par le premier module.

Avantageusement, les moyens de traitement électronique comprennent des moyens d'analyse de conditions environnementales des modules à partir du temps de réponse de référence.

En déterminant des variations des vitesses de diffusion des ondes acoustiques, il est possible de déterminer, par exemple par expérience, la manière dont les conditions environnementales ont elle-même variées.

Préférentiellement, les ondes acoustiques sont des ondes acoustiques ultrasoniques.

L'invention a également pour objet une installation de caténaire comprenant :
- un poteau support ;
- un contrepoids suspendu en côté du poteau support à l'aide d'un câble de suspension du contrepoids ;
caractérisée en ce qu'elle comprend le système de mesure tel que décrit précédemment, le second module étant fixé au contrepoids ou sur le câble de suspension du contrepoids avec son émetteur-récepteur d'ondes acoustiques orienté vers le haut selon une direction verticale haut/bas, et le premier module étant fixé au poteau support en contrehaut du second module avec son émetteur-récepteur d'ondes acoustiques orienté vers le bas selon la direction verticale haut/bas.

L'invention a encore pour objet un procédé de mesure de la position d'un contrepoids suspendu en côté d'un poteau support d'une installation de caténaire, le procédé mettant en oeuvre :
- un premier module fixé sur le poteau support, et comprenant un émetteur-récepteur d'ondes acoustiques ;
- un second module fixé sur le contrepoids ou sur un câble de suspension du contrepoids, en contrebas du premier module, et comprenant un émetteur-récepteur d'ondes acoustiques ;
caractérisé en ce qu'il comprend une phase de mesure comprenant :
- une étape d'émission d'une première onde acoustique par le premier module en direction du second module ;
- une étape d'émission d'une seconde onde acoustique par le second module en direction du premier module, suite à la réception de la première onde acoustique par le second module ;
- une étape de détermination d'un temps de réponse entre l'émission de la première onde acoustique et la réception de la seconde onde acoustique par le premier module ;
- une étape de calcul d'une distance entre le premier module et le second module à partir du temps de réponse.

Ce procédé présente les mêmes avantages que le système précédemment décrits.

Préférentiellement, le procédé met en oeuvre un troisième module destiné à être couplé sur le poteau support en contrebas du premier module, à une distance prédéterminée du premier module, et comprenant un émetteur-récepteur d'ondes acoustiques
et la phase de mesure comprend :
- une étape d'émission d'une troisième onde acoustique par le troisième module en direction du premier module suite à la réception de la première onde sonore par le troisième module ;
- une étape de détermination d'un temps de réponse de référence entre l'émission de la première onde acoustique par le premier module et la réception de la troisième onde acoustique par le premier module ;
- une étape d'ajustement du calcul de la distance calculée lors de l'étape de calcul, à l'aide du temps de réponse de référence.

De cette manière, le procédé permet de prendre en compte d'une variation de la vitesse de diffusion d'ondes acoustiques dans l'air résultant de variations des conditions environnementales aux abords des modules.

Selon un mode de réalisation préféré du procédé, il comprend une phase d'installation préalablement à la phase de mesure, la phase d'installation comprenant :
- une étape de couplage du premier module et du troisième module sur le poteau support, et du second module sur le contrepoids ou sur le câble de suspension du contrepoids, le second module et le troisième module étant couplés en contrebas du premier module ;
- une étape de mesure et d'enregistrement de la distance séparant le premier module du troisième module.

De cette manière, il est très aisément calculé la vitesse de transmission d'une onde acoustique dans l'air grâce à la distance mesurée et enregistrée qui sépare le premier module du troisième module.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique d'une installation de caténaire partielle, mettant en oeuvre un système selon l'invention, de mesure de la position d'un contrepoids de l'installation de caténaire ;
- la figure 2 est une représentation schématique en perspective d'un premier module du système selon l'invention ;
- la figure 3 est une représentation schématique en perspective d'un second module du système selon l'invention ;
- la figure 4 est une représentation schématique du système selon un mode de réalisation de l'invention.

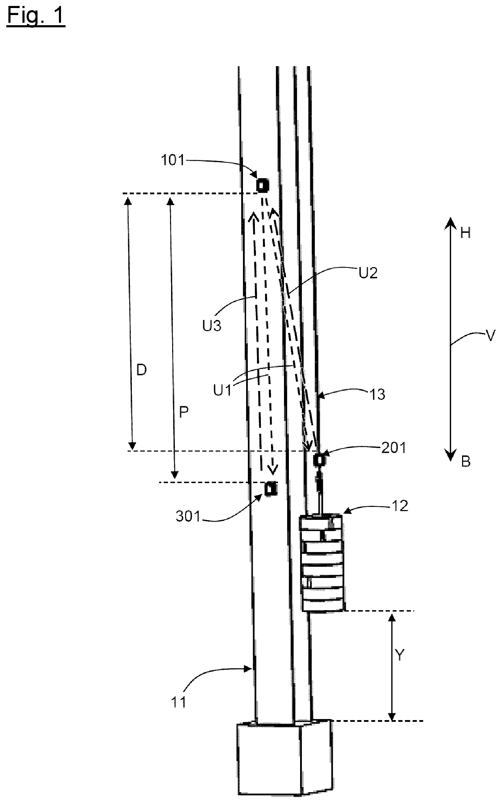

En référence à la figure 1, une partie d'une installation de caténaire est représentée.

Cette installation de caténaire comprend :
- un poteau 11 support ;
- un système de lestage destiné à maintenir en tension un câble de l'installation, le système de lestage comprenant ledit contrepoids 12 et un câble 13 de suspension du contrepoids 12.

Tel que cela est visible, l'une des extrémité du câble 13 est solidaire du contrepoids 12.

En fonction de l'état de l'installation de caténaire, et de conditions environnementales, la position du contrepoids 12 peut varier afin de maintenir la caténaire en tension. La position du contrepoids peut évoluer au sein d'une plage de compensation. Au pire des cas, le contrepoids 12 peut toucher le sol de l'installation suite à une rupture au niveau de la caténaire ou du système de lestage.

Tel que cela est détaillé par la suite, le système permet de mesurer la position du contrepoids 12 qui est suspendu en côté du poteau 11, et notamment de déterminer une côte Y.

En référence aux figures 1 à 4, le système de mesure est décrit ci-après.

Le système de mesure comprend :
- un premier module 101 destiné à être fixé sur le poteau 11 support ;
- un second module 201 destiné à être fixé sur le contrepoids 12 ou sur un câble 13 de suspension du contrepoids 12, en contrebas du premier module 101.

Tel que cela est détaillé par la suite, la position du contrepoids est destinée à être mesurée à l'aide de l'envoi d'une onde acoustique depuis le premier module jusqu'au second module, et au renvoi d'une onde acoustique depuis le second module jusqu'au premier module. Il est alors utilisé la vitesse de diffusion d'une onde acoustique dans l'air, afin de déterminer la distance parcourue par les ondes acoustiques, et ainsi de calculer la position du contrepoids.

Selon le présent mode de réalisation, le système de mesure comprend en outre un troisième module 301 destiné à être couplé au poteau 11 support en contrebas du premier module 101, à une distance prédéterminée P du premier module 101.

Tel que cela est détaillé par la suite, le troisième module permet de réaliser une calibration fine de la mesure de la position du contrepoids. En effet, la distance du troisième module par rapport au premier module est fixe, ce qui permet, via l'envoi d'une onde acoustique depuis le premier module jusqu'au troisième module, et au renvoi d'une onde acoustique depuis le troisième module jusqu'au premier module, de savoir avec précision quelle est la vitesse de diffusion d'une onde acoustique dans l'air au moment où l'on réalise une mesure de la position du contrepoids.

Il est toutefois envisageable un mode de réalisation dans lequel le système de mesure ne comprendrait pas un troisième module 301. Il pourrait alors être utilisé soit une vitesse moyenne de diffusion d'une onde acoustique dans l'air, soit un autre moyen de détermination de conditions environnementales pour déterminer une vitesse de diffusion d'une onde acoustique dans l'air, soit tout autre moyen ad hoc.

Le premier module 101 comprend un émetteur-récepteur 102 d'ondes acoustiques. Tel que cela est détaillé par la suite, le premier module 101 est conçu pour émettre une première onde acoustique U1.

Selon le présent mode de réalisation, le premier module 101 comprend également :
- une batterie électrique 104 alimentant en énergie le premier module 101 ;
- une unité de traitement électronique 103.

De manière similaire, le second module 201 comprend un émetteur-récepteur 202 d'ondes acoustiques. Tel que cela est détaillé par la suite, le second module 102 est conçu pour émettre une seconde onde acoustique U2.

Le second module comprend en outre :
- une batterie électrique 204 alimentant en énergie le second module 201 ;
- une unité de traitement électronique 203.

Enfin, le troisième module 301 comprend un émetteur-récepteur 302 d'ondes acoustiques. Tel que cela est détaillé par la suite, le troisième module 301 est conçu pour émettre une troisième onde acoustique U3.

Le troisième module 301 comprend en outre :
- une batterie électrique 304 alimentant en énergie le troisième module 301 ;
- une unité de traitement électronique 303.

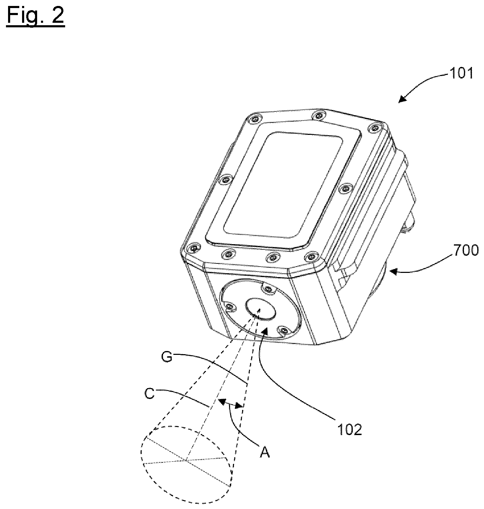

En référence à la figure 2, les émetteurs-récepteurs 102, 202, 302 sont notamment du type présentant un cône d'émission et de réception d'ondes acoustiques dont la génératrice G forme un angle A de +/-20° par rapport à l'axe central C du cône de réception.

Ces émetteurs-récepteurs 102, 202, 302 sont plus spécifiquement du type émettant et réceptionnant des ondes acoustiques ultrasoniques.

La première onde acoustique U1, la seconde onde acoustique U2, et la troisième onde acoustique U3 sont notamment émises à une fréquence de 40kHz.

Les émetteurs-récepteurs 102, 202, 302 sont ainsi configurés pour émettre et capter des ondes acoustiques à une fréquence prédéterminée.

Selon un mode de réalisation envisageable, les modules peuvent être pourvus de capteurs solaires afin de recharger leur batterie électrique.

Il peut être également envisagé que le troisième module ne comprendrait ni batterie électrique, ni unité de traitement électronique 303, et qu'il serait raccordé de manière filaire au premier module 101.

Le premier module 101, le second module 201, ainsi que le troisième module 301, comprennent en outre des moyens de couplage 700 respectivement au poteau 11 support, au contrepoids 12, ou à son câble 13.

En référence plus spécifiquement à la figure 2 qui illustre un premier module 101, les moyens de couplage 700 prennent la forme d'un élément magnétique permettant le couplage du premier module 101 sur un poteau métallique.

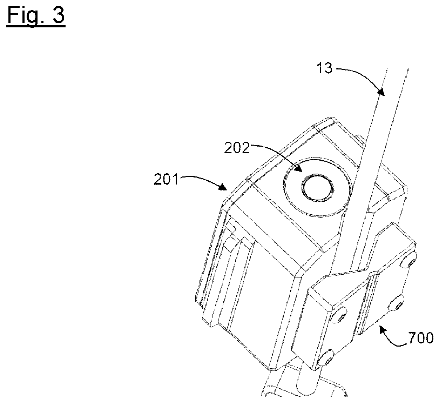

En référence à la figure 3, qui illustre un second module 201, les moyens de couplage 700 prennent la forme d'une mâchoire permettant le couplage du second module 201 sur le câble 13 par serrage.

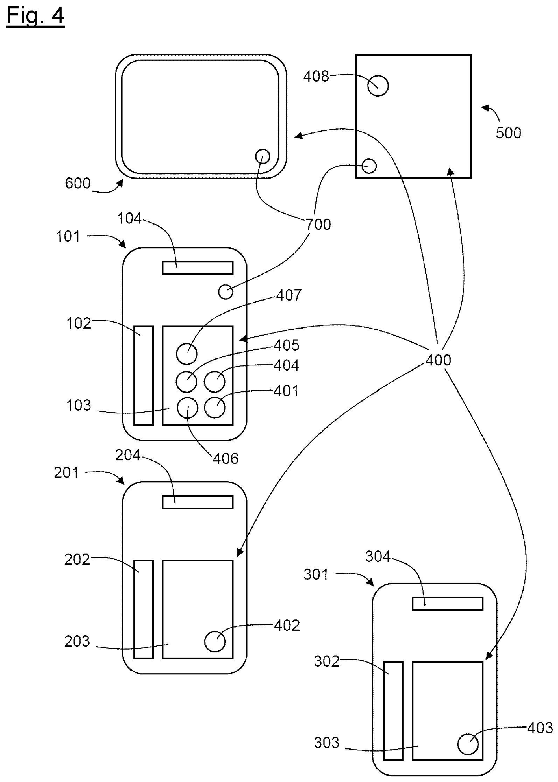

En référence à la figure 4, de manière plus générale, le système de mesure comprend des moyens de traitement électroniques 400.

Selon le présent mode de réalisation, les unités de traitement électronique 103, 203, 303 du premier module 101, du second module 201, et du troisième module 301 forment chacune une partie des moyens de traitement électronique 400.

Tel que cela est illustré par la figure 4, le système de mesure selon le présent mode de réalisation comprend en outre un serveur 500 distant, ainsi qu'une unité électronique distincte 600, telle qu'une tablette électronique ou un ordiphone.

Selon ce mode de réalisation, le serveur 500 distant ainsi que l'unité électronique distincte 600 forment également des parties des moyens de traitement électronique 400.

Le premier module 101, le serveur 500 distant, ainsi que l'unité électronique distincte 600, sont pourvus de moyens de communication sans fil afin d'échanger des données entre eux.

Pour l'unité électronique distincte 600, ainsi que pour le premier module 101, au moins une partie de ces moyens de communication sans fil peuvent prendre la forme de moyens de télécommunications en champs proches, par exemple afin de pouvoir configurer le premier module 101 à l'aide de l'unité électronique distincte 600.

Selon un mode de réalisation envisageable, le second module 201, ainsi que le troisième module 301 peuvent également comprendre des moyens de communication sans fil du type moyens de télécommunication en champs proches de manière à ce que l'unité électronique distincte 600 puisse également les configurer.

Pour le premier module 101, ainsi que pour le serveur 500 distant au moins une partie des moyens de communication sans fil peuvent prendre la forme de moyens de télécommunications à grande distance et à faible consommation d'énergie, par exemple du type commercialisé sous la marque déposée

### « LoraWAN ».

Ces moyens de télécommunications à grande distance et à faible consommation d'énergie permettent par exemple de communiquer pour archivage et suivi la distance D séparant le premier module 101 du second module 201.

Les moyens de traitement électroniques 400 comprennent :
- des premiers moyens de déclenchement 401 de l'émission de la première onde acoustique U1 par le premier module 101 ;
- des seconds moyens de déclenchement 402 de l'émission de la seconde onde acoustique U2 par le second module 201 suite à la réception de la première onde acoustique U1 par le second module 201 ;
- des premiers moyens de détermination 404 d'un temps de réponse entre l'émission de la première onde acoustique U1 et la réception de la seconde onde acoustique U2 par le premier module 101 ;
- des troisièmes moyens de déclenchement 403 de l'émission de la troisième onde acoustique U3 par le troisième module 301 suite à la réception de la première onde sonore U1 par le troisième module 301 ;
- des moyens de calcul 405 d'une distance D entre le premier module 101 et le second module 202 à partir du temps de réponse ;
- des seconds moyens de détermination 406 d'un temps de réponse de référence entre l'émission de la première onde acoustique U1 et la réception de la troisième onde acoustique U3 par le premier module 101 ;
- des moyens d'ajustement 407 d'un calcul de la distance D calculée par les moyens de calcul 405, à l'aide du temps de réponse de référence.

Tel que cela est visible sur la figure 4, les premiers moyens de déclenchement 401, les premiers moyens de détermination 404, les moyens de calcul 405, les seconds moyens de détermination 406, ainsi que les moyens d'ajustement 407 sont compris dans l'unité de traitement électronique 103 du premier module 101.

Les seconds moyens de déclenchement 402 sont quant à eux compris dans l'unité de traitement électronique 203 du second module 201, et les troisièmes moyens de déclenchement 403 sont quant à eux compris dans l'unité de traitement électronique 303 du troisième module 301.

Le premier module 101 forme ainsi un module « maître », tandis que le second module 201 ainsi que le troisième module 301 forment des modules « esclaves ».

Les unités de traitement électronique 103, 203, 303 présentent :
- un mode de veille à basse consommation d'énergie, et
- un mode d'utilisation à consommation d'énergie normale.

Ces unités de traitement électronique sont paramétrées pour passer du mode de veille au mode d'utilisation lors de la reception de la première onde acoustique U1.

Après l'émission respectivement de la seconde onde acoustique et de la troisième onde acoustique, ces unités de traitement électronique sont également paramétrées pour repasser au mode de veille de manière automatique afin d'économiser leur consommation d'énergie.

Plus spécifiquement :
- les seconds moyens de déclenchement 402 de l'émission d'une seconde onde acoustique U2 sont configurés pour déclencher l'émission de la seconde onde acoustique U2 après un premier laps de temps suivant la réception de la première onde acoustique U1 ;
- les troisièmes moyens de déclenchement 403 de l'émission d'une troisième onde acoustique U3 sont configurés pour déclencher l'émission de la troisième onde acoustique U3 après un second laps de temps suivant la réception de la première onde acoustique U1.

Le premier laps de temps est strictement différent du second laps de temps. Avantageusement, le premier laps de temps présente une différence de durée notable avec le second laps de temps.

Selon un mode de réalisation envisageable, l'un du premier laps de temps et du second laps de temps est strictement supérieur à la somme de :
- l'autre du premier laps de temps et du second laps de temps, et
- d'une durée prédéterminée correspondant par exemple à une durée maximale estimée de trajet de la première onde acoustique renvoyée vers le premier module.

L'un du second module 201 et du troisième module 301 est configuré pour envoyer en premier une onde acoustique en direction du premier module 101. Ce module est alors nommé « premier module répondant » tandis que l'autre du second module 201 et du troisième module 301 est nommé « second module répondant ».

Selon le présent mode de réalisation le premier module répondant est également configuré pour désactiver, suite à son propre envoi d'une onde acoustique en direction du premier module 101, sa capacité à « renvoyer une onde acoustique suite à la réception d'une onde acoustique ». Il est ainsi évité que l'onde acoustique renvoyée par le second module répondant ne puisse réactiver accidentellement le premier module répondant.

Selon le présent mode de réalisation, les moyens de traitement électroniques 400 comprennent des moyens d'analyse 408 de conditions environnementales des modules à partir du temps de réponse de référence entre l'émission de la première onde acoustique U1 et la réception de la troisième onde acoustique U3 par le premier module 101 .

Ces moyens d'analyse 408 comparent par exemple le temps de réponse de référence avec un abaque répertoriant des temps de réponse de référence, avec la distance prédéterminée P entre le premier module 101 et le troisième module 301, et des conditions environnementales relevées précédemment.

En rapport avec le système précédemment décrit, la mise en oeuvre de ce système dans l'installation est décrite ci-après, en référence à la figure 1.

Tel que cela est représenté, l'installation présente un poteau 11 support qui s'étend parallèlement à une direction verticale V haut/bas. Le sens haut H et le sens bas B de la direction vertical V haut/bas sont représentés sur la figure 1.

Tel que cela est visible :
- le second module 201 est fixé sur le câble 13 de suspension du contrepoids 12, et
- le premier module 101 est fixée au poteau 11 support.

Selon le présent mode de réalisation, le troisième module 301 est fixé sur le poteau 11 support.

Le premier module 101 est positionné de manière à être en contre-haut du second module 201, ainsi que du troisième module 301. En d'autres termes, le second module 201 et le troisième module 301 sont en contrebas du premier module 101.

Par les expressions « contre-haut » et « contrebas », il est entendu que le second module 201 et le troisième module 301 ne sont pas obligatoirement situés à l'aplomb du premier module 101. En effet, il est recouru à la capacité des ondes acoustiques à se diffuser selon un cône de diffusion pour faciliter la mise en oeuvre du système dans l'installation.

Afin de permettre la bonne diffusion et réception des ondes acoustiques :
- l'émetteur-récepteur 102 du premier module 101 est orienté vers le bas B selon la direction verticale V haut/bas ;
- l'émetteur-récepteur 202 du second module 201 est orienté vers le haut H selon la direction verticale V haut/bas ;
- l'émetteur-récepteur 302 du troisième module 301 est orienté vers le haut H selon la direction verticale V haut/bas.

Le procédé de mesure de la position d'un contrepoids 12 est à présent décrit en rapport aux figures 1 et 4.

Ce procédé est mis en oeuvre par le système précédemment décrit. En conséquence, des caractéristiques du système précédemment décrit correspondent à des étapes du procédé.

Le procédé comprend une phase de mesure permettant de déterminer une distance D séparant le premier module 101 du second module 201.

Cette distance D, rapporté à d'autres distances connues, permet de déterminer une variation de la position du contrepoids 12 dans le temps.

De manière classique, la position du contrepoids 12 dans le temps est évalué à l'aide d'une côte Y qui correspond à la distance séparant la base du contrepoids 12 de la base du poteau sous-jacent au contrepoids 12. Le calcul de la distance D permet ainsi de déterminer la côte Y, notamment par rapport à des valeurs antérieures connues de cette distance D et de la côte Y.

La phase de mesure comprend :
- une étape d'émission d'une première onde acoustique U1 par le premier module 101 en direction du second module 201 ;
- une étape d'émission d'une seconde onde acoustique U2 par le second module 201 en direction du premier module 101, suite à la réception de la première onde acoustique U1 par le second module 201 ;
- une étape de détermination d'un temps de réponse entre l'émission de la première onde acoustique U1 et la réception de la seconde onde acoustique U2 par le premier module 101 ;
- une étape de calcul d'une distance D entre le premier module 101 et le second module 201 à partir du temps de réponse.

Le procédé, selon le présent mode de réalisation, met également en oeuvre le troisième module 301 du système décrit précédemment.

En conséquence, la phase de mesure comprend également :
- une étape d'émission d'une troisième onde acoustique U3 par le troisième module 301 en direction du premier module 101 suite à la réception de la première onde sonore U1 par le troisième module 301 ;
- une étape de détermination d'un temps de réponse de référence entre l'émission de la première onde acoustique U1 par le premier module 101 et la réception de la troisième onde acoustique U3 par le premier module 101 ;
- une étape d'ajustement du calcul de la distance D calculée lors de l'étape de calcul, à l'aide du temps de réponse de référence.

Suite à l'état d'émission d'une première onde acoustique U1, cette première onde acoustique U1 se propage en direction du second module 201, mais également du troisième module 301, et est ainsi captée par ces deux modules.

Cette captation entraîne l'étape d'émission d'une seconde onde acoustique U2, ainsi que l'étape d'émission d'une troisième onde acoustique U3 en direction du premier module 101.

Tel que cela a été détaillé précédemment, l'émission de la seconde onde acoustique U2 et l'émission de la troisième onde acoustique U3 se produisent respectivement après un premier laps de temps, et après un second laps de temps qui sont strictement différents. En d'autres termes, le second module 201 émet la seconde onde acoustique U2 de manière décalée dans le temps, par rapport à l'émission par le troisième module 301 de la troisième onde acoustique U3.

Lors de l'étape de détermination d'un temps de réponse, il est déterminé la durée s'étant écoulé entre l'émission de la première onde acoustique et la réception de la seconde onde acoustique.

Le temps de réponse correspond ainsi au temps de voyage de la première onde acoustique U1 entre le premier module 101 et le second module 201, additionné du premier laps de temps et du temps de voyage de la seconde onde acoustique U2 entre le second module 201 et le premier module 101.

De manière similaire, lors de l'étape de détermination d'un temps de réponse de référence, il est déterminé la durée s'écoulant entre l'émission de la première onde acoustique et la réception de la troisième onde acoustique.

Le temps de réponse de référence correspond ainsi au temps de voyage de la première onde acoustique U1 entre le premier module 101 et le troisième module 301, additionné du second laps de temps et du temps de voyage de la troisième onde acoustique U3 entre le troisième module 301 et le premier module 101.

Connaissant la distance prédéterminée P entre le premier module 101 et le troisième module 301, ainsi que les durées respectives du premier laps de temps et du second laps de temps, l'étape d'ajustement du calcul de la distance D permet, in fine, de connaître la vitesse réelle des ondes acoustiques lors de la phase de mesure.

Au final, l'étape de calcul de la distance D utilise cette vitesse réelle déterminée pour la rapporter au temps de réponse afin d'd'obtenir la distance D.

La réalisation d'une pluralité de phases de mesure espacées dans le temps permet de suivre l'évolution de la position du contrepoids 12 dans le temps.

Préalablement à la phase de mesure, le procédé comprend une phase d'installation.

Cette phase d'installation comprend :
- une étape de couplage du premier module 101 et du troisième module 301 sur le poteau 11 support, et du second module 201 sur le contrepoids 12 ou sur le câble 13 de suspension du contrepoids 12, le second module 201 et le troisième module 301 étant couplés en contrebas du premier module 101 ;
- une étape de mesure et d'enregistrement de la distance prédéterminée P séparant le premier module 101 du troisième module 301.

Préférentiellement, le troisième module 301 et le second module 201 sont installés à hauteur d'homme de manière à faciliter cette installation.

Le premier module 101 peut quant à lui être installé à l'aide d'une perche télescopique. Un parfait alignement de son axe haut/bas avec la direction verticale n'est en effet pas nécessaire grâce aux cônes d'émission et de réception d'ondes acoustiques des émetteurs-récepteurs.

L'étape de mesure et d'enregistrement peut par exemple être réalisée à l'aide d'un télémètre laser, et de l'unité électronique distincte 600 qui permet d'enregistrer la distance prédéterminée P dans l'unité de traitement électronique 103 du premier module 101.

La phase de mesure peut être réalisée de manière périodique, ou sur requête issue de l'unité électronique distincte 600 ou du serveur 500 distant afin d'obtenir la valeur de la distance D.

Cette valeur de la distance D est alors communiquée au serveur 500 distant afin de réaliser un suivi.

Selon une configuration envisageable, la côte Y peut également être enregistrée dans l'unité de traitement électronique 103 du premier module 101, lors de la phase d'installation, afin que la conversion entre la distance D et la côte Y soit réalisée directement par cette unité de traitement électronique 103 et que seule la cote Y soit transmise au serveur 500 distant.

## Revendications

1. Système de mesure de la position d'un contrepoids (12) suspendu en côté d'un poteau (11) support d'une installation de caténaire, le système de mesure comprenant :
- un premier module (101) destiné à être fixé sur le poteau (11) support ;
- un second module (201) destiné à être fixé sur le contrepoids (12) ou sur un câble (13) de suspension du contrepoids (12), en contrebas du premier module (101) ;
**caractérisé en ce que** :
- le premier module (101) comprend un émetteur-récepteur (102) d'ondes acoustiques ;
- le second module (201) comprend un émetteur-récepteur (202) d'ondes acoustiques ;
et **en ce que** le système de mesure comprend des moyens de traitement électroniques (400) comprenant :
- des premiers moyens de déclenchement (401) de l'émission d'une première onde acoustique (U1) par le premier module (101) ;
- des seconds moyens de déclenchement (402) de l'émission d'une seconde onde acoustique (U2) par le second module (201) suite à la réception de la première onde acoustique (U1) par le second module (201) ;
- des premiers moyens de détermination (404) d'un temps de réponse entre l'émission de la première onde acoustique (U1) et la réception de la seconde onde acoustique (U2) par le premier module (101) ;
- des moyens de calcul (405) d'une distance (D) entre le premier module (101) et le second module(202) à partir du temps de réponse.

2. Système de mesure selon la revendication précédente, **caractérisé en ce que** le second module (201) comprend :
- une batterie électrique (204) alimentant en énergie le second module ;
- une unité de traitement électronique (203) formant une partie des moyens de traitement électroniques (400), dont les seconds moyens de déclenchement (402), l'unité de traitement électronique (203) présentant un mode de veille à basse consommation d'énergie et un mode d'utilisation à consommation d'énergie normale, l'unité de traitement électronique (203) étant paramétrée pour passer du mode de veille au mode d'utilisation lors de la reception de la première onde acoustique (U1) par l'émetteur-récepteur (202) d'ondes acoustiques du second module (201).

3. Système de mesure selon la revendication précédente, **caractérisé en ce qu'**il comprend un troisième module (301) destiné à être couplé sur le poteau (11) support en contrebas du premier module (101), à une distance prédéterminée (P) du premier module (101), le troisième module (301) comprenant un émetteur-récepteur (302) d'ondes acoustiques ,
et **en ce que** les moyens de traitement électroniques (400) comprennent :
- des troisièmes moyens de déclenchement (403) de l'émission d'une troisième onde acoustique (U3) par le troisième module (301) suite à la réception de la première onde sonore (U1) par le troisième module (301) ;
- des seconds moyens de détermination (406) d'un temps de réponse de référence entre l'émission de la première onde acoustique (U1) et la réception de la troisième onde acoustique (U3) par le premier module (101) ;
- des moyens d'ajustement (407) d'un calcul de la distance (D) calculée par les moyens de calcul (405), à l'aide du temps de réponse de référence.

4. Système de mesure selon la revendication précédente, **caractérisé en ce que** :
- les seconds moyens de déclenchement (402) de l'émission d'une seconde onde acoustique (U2) sont configurés pour déclencher l'émission de la seconde onde acoustique (U2) après un premier laps de temps suivant la réception de la première onde acoustique (U1) ;
- les troisièmes moyens de déclenchement (403) de l'émission d'une troisième onde acoustique (U3) sont configurés pour déclencher l'émission de la troisième onde acoustique (U3) après un second laps de temps suivant la réception de la première onde acoustique (U1) ;
le premier laps de temps étant strictement différent du second laps de temps.

5. Système de mesure selon l'une quelconque des revendications 3 et 4, **caractérisé en ce que** les moyens de traitement électroniques (400) comprennent des moyens d'analyse (408) de conditions environnementales des modules à partir du temps de réponse de référence.

6. Système de mesure selon l'une quelconque des revendications précédentes, **caractérisé en ce que** les ondes acoustiques sont des ondes acoustiques ultrasoniques.

7. Installation de caténaire comprenant :
- un poteau (11) support ;
- un contrepoids (12) suspendu en côté du poteau (11) support à l'aide d'un câble (13) de suspension du contrepoids (12) ;
**caractérisée en ce qu'**elle comprend le système de mesure selon l'une quelconque des revendications précédentes, le second module (201) étant fixé au contrepoids (12) ou sur le câble (13) de suspension du contrepoids (12) avec son émetteur-récepteur (202) d'ondes acoustiques orienté vers le haut (H) selon une direction verticale (V) haut/bas, et le premier module (101) étant fixé au poteau (11) support en contrehaut du second module (201) avec son émetteur-récepteur (102) d'ondes acoustiques orienté vers le bas (B) selon la direction verticale (V) haut/bas.

8. Procédé de mesure de la position d'un contrepoids (12) suspendu en côté d'un poteau (11) support d'une installation de caténaire, le procédé mettant en oeuvre :
- un premier module (101) fixé sur le poteau (11) support, et comprenant un émetteur-récepteur (102) d'ondes acoustiques ;
- un second module (201) fixé sur le contrepoids (12) ou sur un câble (13) de suspension du contrepoids (12), en contrebas du premier module (101), et comprenant un émetteur-récepteur (202) d'ondes acoustiques ;
**caractérisé en ce qu'**il comprend une phase de mesure comprenant :
- une étape d'émission d'une première onde acoustique (U1) par le premier module (101) en direction du second module (201) ;
- une étape d'émission d'une seconde onde acoustique (U2) par le second module (201) en direction du premier module (101), suite à la réception de la première onde acoustique (U1) par le second module (201) ;
- une étape de détermination d'un temps de réponse entre l'émission de la première onde acoustique (U1) et la réception de la seconde onde acoustique (U2) par le premier module (101) ;
- une étape de calcul d'une distance (D) entre le premier module (101) et le second module (201) à partir du temps de réponse.

9. Procédé de mesure selon la revendication précédente, **caractérisé en ce qu'**il met en oeuvre un troisième module (301) destiné à être couplé sur le poteau (11) support en contrebas du premier module (101), à une distance prédéterminée (P) du premier module (101), et comprenant un émetteur-récepteur (302) d'ondes acoustiques,
et **en ce que** la phase de mesure comprend :
- une étape d'émission d'une troisième onde acoustique (U3) par le troisième module (301) en direction du premier module (101) suite à la réception de la première onde sonore (U1) par le troisième module (301) ;
- une étape de détermination d'un temps de réponse de référence entre l'émission de la première onde acoustique (U1) par le premier module (101) et la réception de la troisième onde acoustique (U3) par le premier module (101) ;
- une étape d'ajustement du calcul de la distance (D) calculée lors de l'étape de calcul, à l'aide du temps de réponse de référence.

10. Procédé de mesure selon la revendication précédente,, **caractérisé en ce qu'**il comprend une phase d'installation préalablement à la phase de mesure, la phase d'installation comprenant :
- une étape de couplage du premier module (101) et du troisième module (301) sur le poteau (11) support, et du second module (201) sur le contrepoids (12) ou sur le câble (13) de suspension du contrepoids (12), le second module (201) et le troisième module (301) étant couplés en contrebas du premier module (101) ;
- une étape de mesure et d'enregistrement de la distance prédéterminée (P) séparant le premier module (101) du troisième module (301).

## Patentansprüche

1. System zum Messen der Position eines Gegengewichts (12), das an der Seite eines Trägermasts (11) einer Oberleitungsanlage aufgehängt ist, wobei das Messsystem Folgendes umfasst:
- ein erstes Modul (101), das dazu bestimmt ist, an dem Trägermast (11) befestigt zu werden;
- ein zweites Modul (201), das dazu bestimmt ist, an dem Gegengewicht (12) oder an einem Aufhängungsseil (13) für das Gegengewicht (12) unterhalb des ersten Moduls (101) befestigt zu werden;
**dadurch gekennzeichnet, dass**:
- das erste Modul (101) einen Schallwellen-Sender-Empfänger (102) umfasst;
- das zweite Modul (201) einen Schallwellen-Sender-Empfänger (202) umfasst;
und dadurch, dass das Messsystem elektronische Verarbeitungsmittel (400) umfasst, die Folgendes umfassen:
- erste Mittel zum Auslösen (401) des Sendens einer ersten Schallwelle (U1) durch das erste Modul (101);
- zweite Mittel zum Auslösen (402) des Sendens einer zweiten Schallwelle (U2) durch das zweite Modul (201) infolge des Empfangens der ersten Schallwelle (U1) durch das zweite Modul (201);
- erste Mittel zum Bestimmen (404) einer Antwortzeit zwischen dem Senden der ersten Schallwelle (U1) und dem Empfangen der zweiten Schallwelle (U2) durch das erste Modul (101);
- Mittel zum Berechnen (405) eines Abstands (D) zwischen dem ersten Modul (101) und dem zweiten Modul (202) ausgehend von der Antwortzeit.

2. Messsystem nach dem vorhergehenden Anspruch, **dadurch gekennzeichnet, dass** das zweite Modul (201) Folgendes umfasst:
- eine elektrische Batterie (204), die das zweite Modul mit Energie versorgt;
- eine elektronische Verarbeitungseinheit (203), die einen Teil der elektronischen Verarbeitungsmittel (400) bildet, darunter die zweiten Auslösemittel (402), wobei die elektronische Verarbeitungseinheit (203) einen Standby-Modus mit geringem Energieverbrauch und einen Betriebsmodus mit normalem Energieverbrauch aufweist, wobei die elektronische Verarbeitungseinheit (203) so eingestellt ist, dass sie beim Empfangen der ersten Schallwelle (U1) durch den Schallwellen-Sender-Empfänger (202) des zweiten Moduls (201) vom Standby-Modus in den Betriebsmodus wechselt.

3. Messsystem nach dem vorhergehenden Anspruch, **dadurch gekennzeichnet, dass** es ein drittes Modul (301) umfasst, das dazu bestimmt ist, in einem vorbestimmten Abstand (P) vom ersten Modul (101) an dem Trägermast (11) unterhalb des ersten Moduls (101) angekoppelt zu werden, wobei das dritte Modul (301) einen Schallwellen-Sender-Empfänger (302) umfasst,
und dadurch, dass die elektronischen Verarbeitungsmittel (400) Folgendes umfassen:
- dritte Mittel zum Auslösen (403) des Sendens einer dritten Schallwelle (U3) durch das dritte Modul (301) infolge des Empfangens der ersten Schallwelle (U1) durch das dritte Modul (301);
- zweite Mittel zum Bestimmen (406) einer Referenzantwortzeit zwischen dem Senden der ersten Schallwelle (U1) und dem Empfangen der dritten Schallwelle (U3) durch das erste Modul (101);
- Mittel zum Anpassen (407) einer Berechnung des von den Berechnungsmitteln (405) berechneten Abstands (D) unter Verwendung der Referenzantwortzeit.

4. Messsystem nach dem vorhergehenden Anspruch, **dadurch gekennzeichnet, dass**:
- die zweiten Mittel zum Auslösen (402) des Sendens einer zweiten Schallwelle (U2) so konfiguriert sind, dass sie das Senden der zweiten Schallwelle (U2) nach einer ersten Zeitspanne nach dem Empfangen der ersten Schallwelle (U1) auslösen;
- die dritten Mittel zum Auslösen (403) des Sendens einer dritten Schallwelle (U3) so konfiguriert sind, dass sie das Senden der dritten Schallwelle (U3) nach einer zweiten Zeitspanne nach dem Empfangen der ersten Schallwelle (U1) auslösen;
wobei sich die erste Zeitspanne strikt von der zweiten Zeitspanne unterscheidet.

5. Messsystem nach einem der Ansprüche 3 und 4, **dadurch gekennzeichnet, dass** die elektronischen Verarbeitungsmittel (400) Mittel zum Analysieren (408) von Umgebungsbedingungen der Module ausgehend von der Referenzantwortzeit umfassen.

6. Messsystem nach einem der vorhergehenden Ansprüche, **dadurch gekennzeichnet, dass** die Schallwellen Ultraschall-Schallwellen sind.

7. Oberleitungsanlage, die Folgendes umfasst:
- einen Trägermast (11);
- ein Gegengewicht (12), das an der Seite des Trägermasts (11) mit einem Aufhängungsseil (13) für das Gegengewicht (12) aufgehängt ist;
**dadurch gekennzeichnet, dass** es das Messsystem nach einem der vorhergehenden Ansprüche umfasst, wobei das zweite Modul (201) mit seinem Schallwellen-Sender-Empfänger (202), der nach oben (H) in einer vertikalen Aufwärts-/Abwärtsrichtung (V) ausgerichtet ist, am Gegengewicht (12) oder am Aufhängungsseil (13) für das Gegengewicht (12) befestigt ist, und wobei das erste Modul (101) mit seinem Schallwellen-Sender-Empfänger (102), der nach unten (B) in der vertikalen Aufwärts-/Abwärtsrichtung (V) ausgerichtet ist, an dem Trägermast (11) oberhalb des zweiten Moduls (201) befestigt ist.

8. Verfahren zum Messen der Position eines Gegengewichts (12), das an der Seite eines Trägermasts (11) einer Oberleitungsanlage aufgehängt ist, wobei das Verfahren Folgendes einsetzt:
- ein erstes Modul (101), das an dem Trägermast (11) befestigt ist und einen Schallwellen-Sender-Empfänger (102) umfasst;
- ein zweites Modul (201), das an dem Gegengewicht (12) oder an einem Aufhängungsseil (13) für das Gegengewicht (12) unterhalb des ersten Moduls (101) befestigt ist und einen Schallwellen-Sender-Empfänger (202) umfasst;
**dadurch gekennzeichnet, dass** es eine Messphase umfasst, die Folgendes umfasst:
- einen Schritt des Sendens einer ersten Schallwelle (U1) durch das erste Modul (101) in Richtung des zweiten Moduls (201);
- einen Schritt des Sendens einer zweiten Schallwelle (U2) durch das zweite Modul (201) in Richtung des ersten Moduls (101) infolge des Empfangens der ersten Schallwelle (U1) durch das zweite Modul (201);
- einen Schritt des Bestimmens einer Antwortzeit zwischen dem Senden der ersten Schallwelle (U1) und dem Empfangen der zweiten Schallwelle (U2) durch das erste Modul (101);
- einen Schritt des Berechnens eines Abstands (D) zwischen dem ersten Modul (101) und dem zweiten Modul (201) ausgehend von der Antwortzeit.

9. Messverfahren nach dem vorhergehenden Anspruch, **dadurch gekennzeichnet, dass** es ein drittes Modul (301) einsetzt, das dazu bestimmt ist, in einem vorbestimmten Abstand (P) vom ersten Modul (101) an dem Trägermast (11) unterhalb des ersten Moduls (101) angekoppelt zu werden, und das einen Schallwellen-Sender-Empfänger (302) umfasst,
und dadurch, dass die Messphase Folgendes umfasst:
- einen Schritt des Sendens einer dritten Schallwelle (U3) durch das dritte Modul (301) in Richtung des ersten Moduls (101) infolge des Empfangens der ersten Schallwelle (U1) durch das dritte Modul (301);
- einen Schritt des Bestimmens einer Referenzantwortzeit zwischen dem Senden der ersten Schallwelle (U1) durch das erste Modul (101) und dem Empfangen der dritten Schallwelle (U3) durch das erste Modul (101);
- einen Schritt des Anpassens der Berechnung des im Berechnungsschritt berechneten Abstands (D) unter Verwendung der Referenzantwortzeit.

10. Messverfahren nach dem vorhergehenden Anspruch, **dadurch gekennzeichnet, dass** es eine Installationsphase vor der Messphase umfasst, wobei die Installationsphase Folgendes umfasst:
- einen Schritt des Ankoppelns des ersten Moduls (101) und des dritten Moduls (301) an den Trägermast (11) und des zweiten Moduls (201) an das Gegengewicht (12) oder an das Aufhängungsseil (13) für das Gegengewicht (12), wobei das zweite Modul (201) und das dritte Modul (301) unterhalb des ersten Moduls (101) angekoppelt sind;
- einen Schritt des Messens und Speicherns des vorbestimmten Abstands (P), der das erste Modul (101) vom dritten Modul (301) trennt.

## Claims

1. System for measuring the position of a counterweight (12) suspended beside a support post (11) of a catenary installation, the measuring system comprising:
- a first module (101) intended to be fixed to the support post (11);
- a second module (201) intended to be fixed to the counterweight (12) or to a suspension cable (13) of the counterweight (12), below the first module (101);
**characterised in that**:
- the first module (101) comprises an acoustic wave transceiver (102);
- the second module (201) comprises an acoustic wave transceiver (202);
and **in that** the measurement system comprises electronic processing means (400) comprising:
- first means (401) for triggering the emission of a first acoustic wave (U1) by the first module (101);
- second means (402) for triggering the emission of a second acoustic wave (U2) by the second module (201) following the reception of the first acoustic wave (U1) by the second module (201);
- first means (404) for determining a response time between the emission of the first acoustic wave (U1) and the reception of the second acoustic wave (U2) by the first module (101);
- means (405) for calculating a distance (D) between the first module (101) and the second module (202) on the basis of the response time.

2. Measurement system according to the preceding claim, **characterised in that** the second module (201) comprises:
- an electric battery (204) supplying energy to the second module;
- an electronic processing unit (203) forming part of the electronic processing means (400), including the second triggering means (402), the electronic processing unit (203) having a low energy consumption standby mode and a normal energy consumption mode of use, the electronic processing unit (203) being configured to switch from the standby mode to the mode of use when the first acoustic wave (U1) is received by the acoustic wave transceiver (202) of the second module (201).

3. Measurement system according to the preceding claim, **characterised in that** it comprises a third module (301) intended to be coupled on the support post (11) below the first module (101), at a predetermined distance (P) from the first module (101), the third module (301) comprising an acoustic wave transceiver (302),
and the electronic processing means (400) comprise:
- third means (403) for triggering the emission of a third acoustic wave (U3) by the third module (301) following the reception of the first sound wave (U1) by the third module (301);
- second means (406) for determining a reference response time between the emission of the first acoustic wave (U1) and the reception of the third acoustic wave (U3) by the first module (101);
- means (407) for adjusting a calculation of the distance (D) calculated by the calculation means (405), using the reference response time.

4. Measurement system according to the preceding claim, **characterised in that**:
- the second means (402) for triggering the emission of a second acoustic wave (U2) are configured to trigger the emission of the second acoustic wave (U2) after a first time period following the reception of the first acoustic wave (U1);
- the third means (403) for triggering the emission of a third acoustic wave (U3) are configured to trigger the emission of the third acoustic wave (U3) after a second time period following the reception of the first acoustic wave (U1);
the first time period being strictly different from the second time period.

5. Measurement system according to any one of claims 3 and 4, **characterised in that** the electronic processing means (400) comprise means (408) for analysing environmental conditions of the modules based on the reference response time.

6. Measurement system according to any one of the preceding claims, **characterised in that** the acoustic waves are ultrasonic acoustic waves.

7. A catenary installation comprising:
- a support post (11);
- a counterweight (12) suspended next to the support post (11) using a counterweight suspension cable (13);
**characterised in that** it comprises the measurement system according to any one of the preceding claims, the second module (201) being fixed to the counterweight (12) or to the counterweight suspension cable (13) with its acoustic wave transceiver (202) oriented upwards (H) in an up/down vertical direction (V), and the first module (101) being fixed to the support post (11) opposite the second module (201) with its acoustic wave transceiver (102) oriented downwards (B) in the up/down vertical direction (V).

8. Method for measuring the position of a counterweight (12) suspended beside a support post (11) of a catenary installation, the method implementing:
- a first module (101) fixed to the support post (11), and comprising an acoustic wave transceiver (102);
- a second module (201) fixed to the counterweight (12) or to a suspension cable (13) of the counterweight (12), below the first module (101), and comprising an acoustic wave transceiver (202);
**characterised in that** it comprises a measurement phase comprising:
- a step of emission of a first acoustic wave (U1) by the first module (101) in the direction of the second module (201);
- a step of emission of a second acoustic wave (U2) by the second module (201) in the direction of the first module (101), following the reception of the first acoustic wave (U1) by the second module (201);
- a step of determining a response time between the emission of the first acoustic wave (U1) and the reception of the second acoustic wave (U2) by the first module (101);
- a step of calculating a distance (D) between the first module (101) and the second module (201) on the basis of the response time.

9. Measurement method according to the preceding claim, **characterised in that** it implements a third module (301) intended to be coupled on the support post (11) below the first module (101), at a predetermined distance (P) from the first module (101), and comprising an acoustic wave transceiver (302),
and the measurement phase comprises:
- a step of emission of a third acoustic wave (U3) by the third module (301) in the direction of the first module (101) following the reception of the first acoustic wave (U1) by the third module (301);
- a step of determining a reference response time between the emission of the first acoustic wave (U1) by the first module (101) and the reception of the third acoustic wave (U3) by the first module (101);
- a step of adjusting the calculation of the distance (D) calculated during the calculation step, using the reference response time.

10. Measurement method according to the preceding claim, **characterised in that** it comprises an installation phase prior to the measurement phase, the installation phase comprising:
- a step of coupling the first module (101) and the third module (301) to the support post (11), and the second module (201) to the counterweight (12) or to the counterweight suspension cable (13), the second module (201) and the third module (301) being coupled at the lower side of the first module (101);
- a step of measuring and recording the predetermined distance (P) separating the first module (101) from the third module (301).
